# FASCICULE DE BREVET EUROPEEN

(11) **EP 3 659 069 B1**
(45) Date de publication et mention de la délivrance du brevet: **05.05.2021**
(21) Numéro de dépôt: 18773523.8
(22) Date de dépôt: 23.07.2018
(51) Int. Cl.: G06K 19/04, G06K 19/077, G09F 3/03

(54) **SYSTÈME ET PROCÉDÉ POUR REPÉRER UN OBJET À RADIOGRAPHIER**
SYSTEM UND VERFAHREN ZUR LOKALISIERUNG EINES ZU RÖNTGENDEN OBJEKTS
SYSTEM AND METHOD FOR LOCATING AN OBJECT TO BE X-RAYED

(30) Priorité: 24.07.2017 FR 1757002
(43) Date de publication de la demande: 03.06.2020
(60) Demande divisionnaire: 20199076.9
(73) Titulaire: Beweis, 13420 Gemenos (FR)
(72) Inventeur: CATONIO, Jacky, 13600 La Ciotat (FR); CROZET, Sylvain, 13600 La Ciotat (FR); VALENSI, Jérémy, 13330 Pelissanne (FR)
(74) Mandataire: Roman, Alexis
(86) Numéro de dépôt international: PCT/FR2018/051885
(87) Numéro de publication internationale: WO 2019/020921

(56) Documents cités:
- WO-A1-2015/124870
- US-A1- 2013 284 814
- US-A1- 2016 284 249

## Description

### Domaine technique de l'invention.

L'invention a pour objet un système et un procédé de repérage d'un objet à radiographier.

Elle concerne le domaine technique des accessoires permettant d'aider un opérateur à repérer un objet devant être radiographié. Elle concerne également les techniques permettant d'associer de manière certaine, sans possibilité de falsification, un cliché radiographique à un objet radiographié, lequel objet peut être une soudure (de tuyauterie, de plaque, ...), un assemblage de pièces mécaniques, un matériau composite dont la présence de bulles d'aire et/ou la qualité du collage doit être vérifiée, etc.

### État de la technique.

Le repérage des soudures à radiographier se fait généralement par un opérateur-radio au moment du tir de la radio (i.e. au moment de la prise du cliché radiographique). C'est ce même opérateur qui installe des numéros ou lettres en plomb permettant d'identifier la soudure à radiographier. Il est donc possible qu'un opérateur mal intentionné puisse modifier l'identification de la soudure. Par exemple, l'opérateur peut affecter le numéro d'une soudure qu'il sait non conforme au cliché radiographique d'une soudure conforme.

Pour pallier cela, le document brevet EP2591447 (BEWEIS) décrit un dispositif permettant de relier une soudure devant être radiographiée au cliché radiographique, limitant les possibilités de falsification. Ce dispositif consiste en un contenant intégrant un identifiant alpha numérique opaque aux rayons X et gamma. Une résine opaque est coulée dans la coque du contenant, afin que l'identifiant soit invisible à l'œil nu. Ce dispositif comprend en outre un autocollant détachable sur lequel est inscrit le même identifiant alpha numérique.

Le contenant est d'abord installé sur l'objet sur lequel est réalisée la soudure à contrôler. Cette installation est réalisée au moyen d'un collier de fixation fermé par un élément de fermeture inviolable. L'installation du contenant est effectuée par une tierce personne autre que l'opérateur-radio. Cette tierce personne aura également pris soin de détacher l'autocollant pour le coller à côté d'un identifiant de la soudure, par exemple dans une liste d'identifiants de soudures auxquels sont associés des identifiants alpha numérique.

L'opérateur-radio réalise le tir radio de la soudure au niveau de laquelle est agencé le contenant. L'identifiant apparaît sur le cliché radiographique. Ce n'est donc qu'au moment où l'opérateur-radio développe le cliché radiographique qu'il connaît l'identifiant inscrit dans la plaque-support.

Le lien entre la soudure et le cliché radiographique peut alors être fait en lisant le numéro de l'identifiant sur le cliché et en le comparant à l'identifiant inscrit sur l'autocollant collé dans la liste.

En pratique, une installation comprend un grand nombre de soudures à contrôler. De fait, la liste d'identifiants de soudures auxquels sont associés les identifiants alpha numérique comprend un grand nombre de références. L'association, à posteriori, d'un cliché radiographique avec l'identifiant d'une soudure est donc généralement fastidieux et coûteux en temps.

Le document brevet EP3107682 (BEWEIS) divulgue un contenant dans lequel est logé l'identifiant alpha numérique. Le contenant est là encore installé au moyen d'un collier de fixation fermé par un élément de fermeture inviolable. Ce contenant intègre également une puce RFID comprenant une mémoire dans laquelle sont incrémentés : l'identifiant alpha numérique et un identifiant unique associé à la soudure à radiographier.

Cette puce RFID permet de contenir une information de géo-localisation de la soudure à contrôler, de sorte qu'un opérateur peut aisément s'assurer qu'il installe bien le contenant au niveau de la bonne soudure.

De plus, cette puce RFID permet de mettre en œuvre un processus de contrôle particulièrement fiable et sécurisé, au terme duquel on s'assure que le cliché radiographique développé d'une soudure correspond bien à la soudure à contrôler, et non pas à une autre soudure. Le lien entre la soudure et le cliché radiographique est ici effectué en lisant le numéro de l'identifiant sur le cliché et en le comparant à un identifiant directement collé sur ledit cliché.

La technique décrite dans le document brevet EP3107682 (BEWEIS) est particulièrement avantageuse.

Toutefois, les techniques actuelles de géo-localisation ne sont pas suffisamment précises pour déterminer exactement la position d'une soudure. Et certaines installations peuvent présenter des problèmes de réceptivité. De fait, et dans ces conditions, la vérification de l'emplacement de la soudure à contrôler par géo-localisation peut présenter un faible intérêt.

En outre, le mode de fixation du contenant peut laisser subsister une faille de sécurité quand un opérateur-radio mal intentionné réalise le tir radio de la soudure. En effet, certaines soudures à contrôler sont plus difficiles d'accès que d'autres. Il peut donc arriver qu'un opérateur-radio ne souhaite pas réaliser le tir radio d'une soudure 'A' difficile d'accès. Dans ce cas, il pourrait déplacer le contenant 'A' associé à cette soudure 'A', vers une soudure 'B' plus facile d'accès. Il lui suffit pour cela de briser l'élément de fermeture du collier sur lequel est installé ledit contenant 'A' et de l'installer au niveau de la soudure 'B'. Après avoir réalisé le(s) tir(s) radio de la soudure 'B' avec le contenant 'A', l'opérateur-radio replace ledit contenant 'A' au niveau de la soudure 'A'. Cette opération de replacement est très simple puisqu'en pratique, les opérateurs radio ont à leur disposition plusieurs éléments de fermeture inviolables qu'ils peuvent se procurer dans une réserve. Il lui suffit donc de replacer le contenant 'A' au niveau de la soudure 'A' en fermant le collier avec un nouvel élément de fermeture inviolable.

Le document US 2013/284814 A1 (HUANG PO-WEI) décrit un rivet d'identification par radiofréquence qui est destiné à équiper des objets tels que des vêtements, des chaussures, des sacs, des contenants de liquides ou autres, aux fins de lutte contre le vol et la fraude.

Le document US 2016/284249 A1 (DALY STEPHEN ) concerne un dispositif de fixation inviolable approprié pour une utilisation avec un bracelet d'identification d'une personne ou d'un animal.

L'invention vise à remédier à cet état des choses. En particulier, un objectif de l'invention est de proposer un système de repérage d'un objet à radiographier permettant de se prémunir davantage de toute falsification.

Un autre objectif de l'invention est de proposer un système de repérage dont la conception est simple et fiable, et dont l'utilisation est aisée.

### Divulgation de l'invention.

La solution proposée par l'invention est un système de repérage d'un objet à radiographier, comprenant :
- un contenant dans lequel est intégré, de manière invisible à l'œil nu, un identifiant alpha numérique opaque aux rayons X et gamma,
- un support intégrant de manière cachée ou cryptée un identifiant unique associé à l'objet à radiographier et/ou l'identifiant alpha numérique,
- un collier adapté pour installer le contenant sur l'objet à radiographier, lequel collier est pourvu d'un élément de fermeture inviolable,
- le support est physiquement disjoint du contenant et solidarisé à l'élément de fermeture du collier,
- l'ensemble formé par le support et l'élément de fermeture est fixé de manière détachable au contenant, de sorte que :
   ∘ dans un état initial attaché, le contenant est solidarisé à l'ensemble formé par le support et l'élément de fermeture, et
   ∘ dans un état détaché, le contenant est physiquement désolidarisé de l'ensemble formé par le support et l'élément de fermeture.

En associant le support à l'élément de fermeture, on rend ce dernier unique, car intimement associé à l'identifiant unique de l'objet à radiographier. On établit en outre un appairage entre le contenant et l'élément de fermeture. Un opérateur-radio mal intentionné ne peut donc plus briser l'élément de fermeture et le remplacer par un autre, réduisant de fait toute tentative de falsification. En fixant au contenant, de manière détachable, l'ensemble formé par le support et l'élément de fermeture, on dispose d'une pièce unitaire aisément manipulable, et qui permet de faciliter l'appairage entre le contenant et l'élément de fermeture. En effet, la mise en position de l'identifiant alpha numérique dans le contenant et l'intégration de l'identifiant unique dans le support peuvent être effectuées quasi simultanément, sans risque de se tromper et/ de mélanger un élément de fermeture avec un autre contenant. On est ainsi assuré que l'élément de fermeture reste bien associé au contenant auquel il est appairé. En outre, la pièce unitaire obtenue peut être facilement réalisée, à moindre coût.

D'autres caractéristiques avantageuses de l'invention sont listées ci-dessous. Chacune de ces caractéristiques peut être considérée seule ou en combinaison avec les caractéristiques remarquables définies ci-dessus, et faire l'objet, le cas échéant, d'une ou plusieurs demandes de brevet divisionnaires :
- Le contenant est avantageusement pourvu d'un lien à l'extrémité duquel est aménagée une boucle adaptée pour recevoir le collier.
- Le contenant, le lien et la boucle forment préférentiellement une pièce monobloc.
- Avantageusement, l'élément de fermeture est solidarisé au lien ou à la boucle par un organe de liaison, lequel organe de liaison est sécable ou adapté pour être découpé, de sorte que ledit élément de fermeture puisse être physiquement désolidarisé dudit lien ou de ladite boucle pour fermer le collier.
- L'élément de fermeture peut également être solidarisé au contenant par un organe de liaison, lequel organe de liaison est sécable ou adapté pour être découpé, de sorte que ledit élément de fermeture puisse être ultérieurement physiquement désolidarisé dudit contenant pour fermer le collier.
- Préférentiellement, le contenant, le lien, la boucle, l'élément de fermeture et l'organe de liaison forment, dans un état initial, une pièce monobloc.
- Préférentiellement : le collier est réalisé dans un matériau étirable ; les propriétés du matériau du collier sont telles que l'épaisseur dudit collier diminue lorsqu'il est étiré ; l'élément de fermeture est formé par deux mâchoires adaptées pour bloquer le collier en position lorsqu'il est rebouclé sur lui-même sur sa longueur, lesdites mâchoires étant pourvues d'organes de verrouillage coopérant ensemble pour le blocage dudit collier ; les organes de verrouillage sont configurés de sorte qu'ils ne puissent coopérer ensemble pour bloquer le collier en position, que lorsque ledit collier est étiré et que l'épaisseur de ce dernier est diminuée.
- Le contenant se présente avantageusement sous la forme d'un compartiment présentant : - une base pourvue d'un logement dans lequel est installé l'identifiant alpha numérique ; - un capot ; - des éléments de verrouillage du capot sur la base.
- Le support comporte avantageusement une puce RFID dans la mémoire de laquelle est incrémenté l'identifiant unique associé à l'objet à radiographier et/ou l'identifiant alpha numérique. Le support peut, dans ce cas, se présenter sous la forme d'un compartiment aménagé sur l'élément de fermeture, lequel compartiment est pourvu d'un logement dans lequel est installé la puce RFID. Le support peut également se présenter sous la forme d'une étiquette fixée sur l'élément de fermeture, la puce RFID étant intégrée dans ladite étiquette.
- Dans une variante de réalisation, le support comporte un code-barres dans lequel est intégré l'identifiant unique associé à l'objet à radiographier et/ou l'identifiant alpha numérique. Dans ce cas, le support peut se présenter sous la forme d'une étiquette fixée sur l'élément de fermeture, le code-barres étant imprimé ou rapporté sur ladite étiquette.
- Un autre aspect de l'invention concerne un procédé pour repérer une soudure à radiographier réalisée sur un objet, lequel procédé comprend les étapes suivantes : - intégrer dans un contenant un identifiant alpha numérique opaque aux rayons X et gamma, lequel identifiant est invisible à l'œil nu après son intégration dans ledit support ; - associer un identifiant unique à l'objet à radiographier ; intégrer de manière cachée ou cryptée, dans un support, l'identifiant unique associé à l'objet et/ou l'identifiant alpha numérique ; - installer le contenant sur l'objet, au moyen d'un collier pourvu d'un élément de fermeture ; - disjoindre le support du contenant pour solidariser ledit support à l'élément de fermeture du collier ; fixer au contenant, de manière détachable, l'ensemble formé par le support et l'élément de fermeture, de sorte que : dans un état initial attaché, le contenant est solidarisé à l'ensemble formé par le support et l'élément de fermeture, et dans un état détaché, le contenant est physiquement désolidarisé de l'ensemble formé par le support et l'élément de fermeture.
- Selon un mode de réalisation, le contenant est relié à un lien à l'extrémité duquel est aménagée une boucle adaptée pour recevoir le collier, l'élément de fermeture étant solidarisé au lien ou à la boucle par un organe de liaison, lequel organe de liaison est sécable ou adapté pour être découpé, de sorte que ledit élément de fermeture puisse être physiquement désolidarisé dudit lien ou de ladite boucle pour fermer le collier, ledit procédé comprenant en outre les étapes consistant à : - intégrer l'identifiant unique et/ou l'identifiant alpha numérique dans le support lorsque l'élément de fermeture est initialement solidarisé au lien ou à la boucle par l'organe de liaison, laquelle intégration est réalisée dans un lieu qui est éloigné du lieu où est situé l'objet à radiographier ; - atteindre le lieu où est situé l'objet à radiographier en maintenant l'élément de fermeture solidarisé au lien ou à la boucle par l'organe de liaison ; - installer le contenant sur l'objet à radiographier, laquelle installation est réalisée après avoir physiquement désolidarisé l'élément de fermeture du lien ou de la boucle.
- Dans une variante de réalisation, l'élément de fermeture est solidariser au contenant par un organe de liaison, lequel organe de liaison est sécable ou adapté pour être découpé, de sorte que ledit élément de fermeture puisse être physiquement désolidarisé dudit contenant, ledit procédé comprenant en outre les étapes consistant à : - intégrer l'identifiant unique et/ou l'identifiant alpha numérique dans le support lorsque l'élément de fermeture est initialement solidarisé au contenant par l'organe de liaison, laquelle intégration est réalisée dans un lieu qui est éloigné du lieu où est situé l'objet à radiographier ; - atteindre le lieu où est situé l'objet à radiographier en maintenant l'élément de fermeture solidarisé au contenant par l'organe de liaison ; - installer le contenant sur l'objet à radiographier, laquelle installation est réalisée après avoir physiquement désolidarisé l'élément de fermeture du contenant.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 schématise un mode de réalisation de l'invention, où le contenant, l'élément de fermeture et un compartiment contenant une puce RFID forment une pièce monobloc,
- la figure 2a est une vue en coupe selon A-A du contenant de la figure 1, en position ouverte,
- la figure 2b montre le contenant de la figure 2a, en position fermée,
- la figure 3a est une vue en coupe selon B-B du compartiment contenant la puce RFID de la figure 1, en position ouverte,
- la figure 3b montre le compartiment de la figure 3a en position fermée,
- la figure 4 schématise un autre mode de réalisation de l'invention, où le contenant et l'élément de fermeture forment une pièce monobloc, une puce RFID étant intégrée dans une étiquette,
- la figure 5a est une vue en coupe d'un élément de fermeture utilisé dans le système de repérage objet de l'invention, lequel élément est solidaire d'un compartiment contenant une puce RFID, l'élément de fermeture et le compartiment étant en position ouverte,
- la figure 5b montre l'élément de fermeture et le compartiment de la figure 5a en position fermée,
- la figure 6 montre l'élément de fermeture de la figure 5b fermant un collier,
- la figure 7a schématise une portion d'un collier utilisé dans le système de repérage objet de l'invention, lequel collier est dans un état dit « de repos »,
- la figure 7b montre la portion de collier de la figure 7a dans un état dit « étiré »,
- la figure 8 est une vue en coupe schématisant l'installation d'un système de repérage conforme à l'invention, autour d'une tuyauterie,
- la figure 9 est une vue schématique d'une première étiquette selon l'invention,
- la figure 10 illustre l'installation d'un système de repérage conforme à l'invention et d'une pochette contenant plusieurs premières étiquettes, autour d'une tuyauterie, au niveau d'une soudure,
- la figure 11 schématise une enveloppe contenant un cliché radiographique, et sur laquelle est collée une première étiquette,
- la figure 12 illustre des étapes permettant d'éditer une seconde étiquette destinée à être collée sur un cliché radiographique,
- la figure 13 illustre des étapes permettant de générer un rapport prérempli.

Bien entendu, la présente invention n'est pas limitée aux exemples et modes de réalisation décrits ci-après et représentés sur les figures, mais elle est susceptible de nombreuses variantes accessibles à l'homme du métier.

### Modes préférés de réalisation de l'invention.

La description qui suit fait référence au contrôle d'une soudure de tuyauterie. L'invention est toutefois applicable au contrôle de tout autre type d'objet à radiographier tel qu'une soudure de plaque, un assemblage de pièces mécaniques, un matériau composite dont la présence de bulles d'aire et/ou la qualité du collage doit être vérifiée, etc.

L'installation à contrôler est typiquement une usine ou une centrale nucléaire comprenant plusieurs dizaines de mètres linéaires de tuyauterie sur lesquelles sont réalisées plusieurs centaines de soudures.

Chaque soudure S à radiographier est associée à un identifiant unique, préférentiellement constitué d'une suite de lettres et/ou de chiffres et/ou de symboles. A titre d'exemple, et pour illustrer la présente invention, l'identifiant « C231A226 » est associé à la soudure S à contrôler.

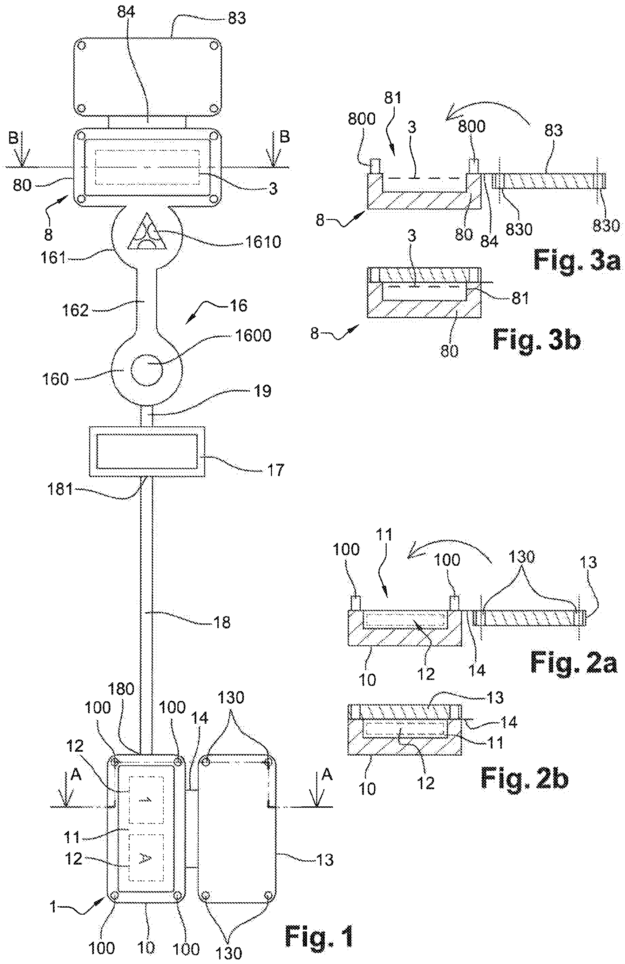

La figure 1 illustre différents éléments constitutifs du système de repérage conforme à l'invention. Le système comprend un contenant 1 dans lequel est intégré, de manière invisible à l'œil nu, un identifiant alpha numérique unique opaque aux rayons X et gamma.

Sur les figures 1, 2a et 2b, le contenant 1 se présente sous la forme d'un compartiment présentant une base 10 pourvue d'un logement 11 dans lequel sont installés les éléments 12 constitutifs de l'identifiant alpha numérique. Plus particulièrement, la base 10 prend la forme d'une cuvette délimitant le logement 11. Un capot 13 est relié à la base 10 au moyen d'une charnière 14, laquelle charnière se présente avantageusement sous la forme d'une bande de plastique souple et/ou pliable reliant ledit capot à ladite base. Le capot 13 peut ainsi pivoter autour de la charnière 14 (pivotement illustré par la flèche sur la figure 2a) pour fermer la base 10 et emprisonner l'identifiant alpha numérique. Le capot 13 fait ainsi office de couvercle reposant sur les rebords du logement 11 lorsqu'il est en position de fermeture.

Des éléments de verrouillage 100, 130 permettent de verrouiller le capot 13 sur la base 10. Préférentiellement, ces éléments de verrouillage se présentent sous la forme d'ergots 100 disposés en saillie sur les rebords du logement 11 et adaptés pour se loger dans des logements 130 complémentaires réalisées sur le capot 13. De manière à rendre indémontable ce verrouillage, les ergots 100 sont avantageusement soudés à chaud dans les logements 130. Il n'est donc plus possible d'ouvrir le capot 13 sauf à détruire le compartiment 1. D'autres techniques de verrouillage indémontable peuvent bien évidemment être employées, comme la soudure ou le collage direct du capot 13 sur la base 10.

Les éléments 10, 13, 14 constitutifs du contenant 1 sont préférentiellement, réalisés à partir d'une matière opaque. Cette opacité rend l'identifiant alpha numérique invisible à l'œil nu. En position fermée, le contenant 1 est par exemple de forme rectangulaire, d'une longueur comprise entre 20 mm et 40 mm, d'une largeur comprise entre 10 mm et 20 mm, et d'une épaisseur d'environ 3 mm.

Par identifiant alpha numérique, on entend une suite de lettres et/ou de chiffres et/ou de symboles. Dans l'exemple illustré sur les figures annexées, cet identifiant est constitué d'un chiffre « 1 » et d'une lettre « A ». Selon un mode préféré de réalisation, l'identifiant alpha numérique 12 reprend certaines lettres et/ou chiffres et/ou symboles de l'identifiant de la soudure. Exemple : C231A226 → **1A.** L'utilisation de plusieurs chiffres et/ou lettres et/ou symboles peut bien évidemment être envisagée. Cet identifiant alpha numérique est unique et ses éléments constitutifs 12 sont réalisés dans un matériau opaque au rayonnement de la source radio, et plus particulièrement aux rayons X et gamma. Les éléments 12 sont préférentiellement réalisés en plomb ou en laiton. Après avoir disposé les éléments 12 dans le logement 11, et comme cela apparaît sur les figures 2a et 2b, ledit logement est obturé par le capot 13.

Sur la figure 1, le contenant 1 est pourvu d'un lien 18 à l'extrémité duquel est aménagée une boucle 17 adaptée pour recevoir le collier 15 décrit plus avant dans la description. Le lien 18 et la boucle 17 font parties du contenant 1. Le lien 18 se présente avantageusement sous la forme d'une tige en plastique d'une longueur comprise entre 40 mm et 100 mm, et dont le diamètre est compris entre 1 mm et 5 mm. Le lien 18 est ainsi configuré pour être suffisamment souple à la flexion de sorte qu'un opérateur puisse le courber manuellement sans difficulté.

Le lien 18 présente une première extrémité 180 sur laquelle est fixée la base 10, et une seconde extrémité 181 sur laquelle est fixée la boucle 17. Cette dernière a des dimensions complémentaires du collier 15 de sorte qu'il puisse aisément être inséré au travers de ladite boucle.

Sur la figure 1, la boucle 17 est elle-même solidarisée à un élément de fermeture 16 du collier 15, au moyen d'un organe de liaison 19. Ce dernier est préférentiellement réalisé à partir d'un matériau plastique moulé avec la boucle 17 et l'élément de fermeture 16.

Cet organe de liaison 19 est sécable ou adapté pour être découpé, de sorte que l'élément de fermeture 16 puisse être ultérieurement physiquement désolidarisé du contenant 1 pour fermer le collier 1. L'organe de liaison 19 présente une première extrémité sur laquelle est fixée la boucle 17, et une seconde extrémité sur laquelle est fixé l'élément de fermeture 16.

En pratique, l'organe de liaison 19 se présente sous la forme d'un raccord en plastique d'une longueur comprise entre 1 mm et 5 mm, et dont le diamètre est compris entre 1 mm et 2 mm. Ce raccord peut présenter une zone de moindre épaisseur le rendant sécable ou facilement découpable. Une torsion du raccord 19 peut également permettre de le rompre à la main.

Dans une variante de réalisation, l'organe de liaison 19, solidaire de l'élément de fermeture 16, peut être initialement relié au contenant 1 (et plus particulièrement à la base 10), ou relié au lien 16, entre ladite boucle et ledit contenant.

L'élément de fermeture 16 se présente avantageusement sous la forme d'un scellé inviolable. Au sens de l'invention, on entend par « inviolable » le fait que toute tentative de démontage de l'élément de fermeture 16 empêche son remontage ou entraîne sa destruction ou, à minima, entraîne l'apparition de marques visibles à l'œil nu.

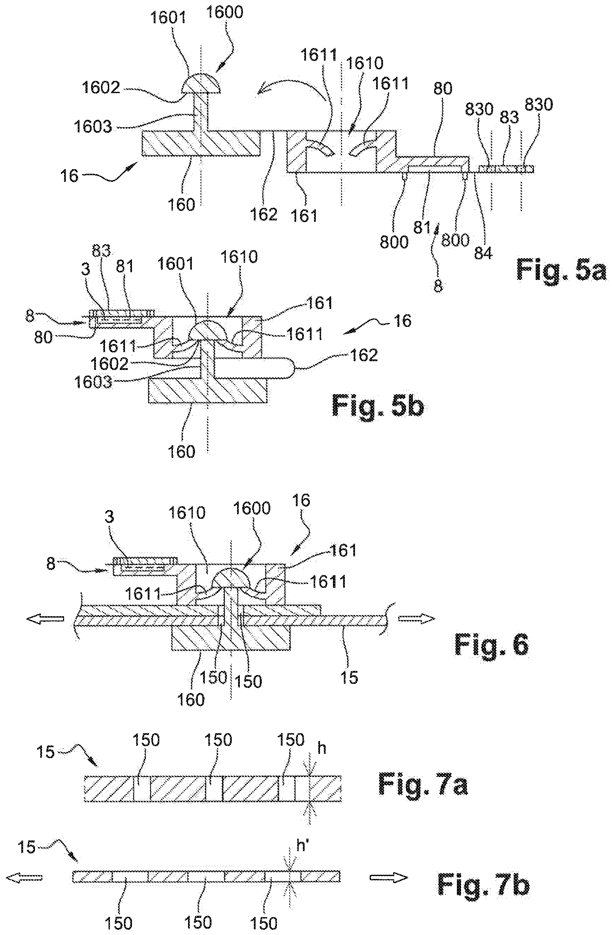

Sur les figures 1, 5a et 5b et 6, l'élément de fermeture 16 est formé par deux mâchoires 160 et 161, préférentiellement reliées par une charnière 162. Une première mâchoire 161 peut ainsi pivoter autour de la charnière 162 (pivotement illustré par la flèche sur la figure 5a) pour se solidariser sur la seconde mâchoire 160, de sorte que lesdites mâchoires coopèrent ensemble. Les mâchoires 160, 161 et la charnière 162 sont avantageusement réalisées à partir d'une matière plastique moulée.

Les mâchoires 160 et 161 sont pourvues d'organes de verrouillage coopérant ensemble pour le blocage en position du collier 15. Plus particulièrement, une des mâchoires 160 présente au moins un ergot 1600 adapté pour se loger de manière indémontable dans un logement 1610 réalisé dans l'autre mâchoire 161. Dans le mode de réalisation des figures 5a et 5b, l'ergot 1600 présente une extrémité 1601 en forme de demi-sphère dont la base 1602 est relié à la base de la mâchoire 160 par une tige axiale 1603. La concavité de la demi-sphère 1601 est orientée vers le haut, c'est-à-dire à l'opposé de la base de la mâchoire 160. Le logement 1610 se présente sous la forme d'une portion de cylindre dont les dimensions internes autorisent l'insertion axiale de l'ergot 1600 et notamment l'extrémité 1601. Les parois internes du logement 1610 sont pourvues de pattes d'accrochage 1611 s'étendant de manière radiale, ou sensiblement radiale, dans ledit logement. Ces pattes 1611 sont conformées de manière à s'effacer au passage de l'ergot 1600 pour laisser passer l'extrémité 1601. Cette possibilité d'effacement est par exemple rendue possible par une certaine flexibilité des pattes 1611. Lorsque l'extrémité 1601 dépasse les pattes 1611, celles-ci retournent à leur état initial par un effet ressort et viennent en butée contre la base 1602 (figure 5b) de manière à s'opposer à tout retrait axial et verrouiller l'ergot 1600 dans le logement 1610. Toute tentative d'extraction de l'ergot 1600 hors du logement 1610 conduit alors à la destruction des pattes 1611.

La mâchoire 160 pourvue de l'ergot 1600 se présente par exemple sous la forme d'une pastille plate dont le diamètre est compris entre 7 mm et 20 mm et dont l'épaisseur est comprise entre 1 mm et 5 mm. L'ergot 1600 a par exemple une longueur comprise entre 7 mm et 15 mm. La mâchoire 1610 pourvue du logement 1610 se présente par exemple sous la forme d'une portion de tube dont le diamètre externe est compris entre 7 mm et 20 mm, dont le diamètre interne (délimitant le logement 1610) est compris entre 5 mm et 18 mm, et dont la hauteur est comprise entre 5 mm et 10 mm. La charnière 162 se présente avantageusement sous la forme d'une bande de plastique souple et/ou pliable reliant les deux mâchoires 160 et 161.

Sur les figures annexées, l'organe de liaison 19 est solidaire de la mâchoire 160 qui est pourvue de l'ergot 1600, mais il pourrait tout à fait être solidarisé à l'autre mâchoire 1610.

Selon l'invention, on utilise un support dans lequel est intégré de manière cachée ou cryptée l'identifiant unique de la soudure S. L'identifiant alpha numérique « 1A » est également préférentiellement intégré de manière cryptée ou cachée dans ce support. Le support peut en outre intégrer d'autres inscriptions telles que : nom de l'installation, nom du soudeur, localisation de la soudure, matériau de la soudure, etc. Comme expliqué plus avant dans la description, ce support permet de regrouper l'identifiant unique de la soudure S et l'identifiant alpha numérique. Si le support intègre ces deux identifiants, le regroupement est réalisé in-situ dans ledit support. Ce regroupement peut également être réalisé dans un serveur informatique distant. Par exemple, l'identifiant unique de la soudure S (et/ou l'identifiant alpha numérique) peut être enregistré dans la mémoire d'une puce RFID (ou inscrit dans un code-barres) intégrée dans le support. La lecture de la puce RFID (ou du code-barres) permet d'accéder à une base de données enregistrée dans le serveur distant, le regroupement étant réalisé dans ladite base.

Sur la figure 1, le support se présente sous la forme d'un compartiment 8 aménagé sur l'élément de fermeture 16. Le compartiment 8 présente une base 80 pourvue d'un logement 81 dans lequel est installés une puce RFID 3 dans la mémoire de laquelle est incrémenté l'identifiant de la soudure S et/ou l'identifiant alpha numérique. Ces identifiants étant cachés dans la mémoire de la puce RFID 3, ils ne sont pas directement accessibles à un opérateur.

La base 80 prend la forme d'une cuvette délimitant le logement 81. Un capot 83 est relié à la base 80 au moyen d'une charnière 84, laquelle charnière se présente avantageusement sous la forme d'une bande de plastique souple et/ou pliable reliant ledit capot à ladite base. Le capot 83 peut ainsi pivoter autour de la charnière 84 (pivotement illustré par la flèche sur la figure 3a) pour fermer la base 80 et emprisonner la puce RFID 3. Le capot 83 fait ainsi office de couvercle reposant sur les rebords du logement 81 lorsqu'il est en position de fermeture.

Des éléments de verrouillage 800, 830 permettent de verrouiller le capot 83 sur la base 80. Préférentiellement, ces éléments de verrouillage se présentent sous la forme d'ergots 800 disposés en saillie sur les rebords du logement 81 et adaptés pour se loger dans des logements 830 complémentaires réalisées sur le capot 83. Pour rendre ce verrouillage indémontable, les ergots 800 sont avantageusement soudés à chaud dans les logements 830. Il n'est donc plus possible d'ouvrir le capot 83 sauf à détruire le compartiment 8. D'autres techniques de verrouillage indémontable peuvent bien évidemment être employées, comme la soudure ou le collage directe du capot 83 sur la base 80. En position fermée, le compartiment 8 est par exemple de forme rectangulaire, d'une longueur comprise entre 10 mm et 30 mm, d'une largeur comprise entre 50 mm et 10 mm, et d'une épaisseur d'environ 3 mm.

Le contenant 1, le lien 18 et la boucle 17 sont préférentiellement réalisés à partir d'une matière plastique opaque et forment une pièce monobloc et mono-matière. La technique de moulage permet d'obtenir aisément et à moindre coût cette pièce monobloc. Cette conception est simple, peu onéreuse et nécessite moins de manipulations que celle décrite dans le document brevet EP3107682 précité où la coque du contenant devait être préalablement percée pour passer un lien en forme de boucle. Le matériau utilisé peut par exemple être un plastique rigide du type polyamide, polypropylène, polycarbonate polychlorure de vinyle, etc. On peut également utiliser un matériau souple du type silicone. Le contenant 1, le lien 18 et la boucle 17 ne sont pas nécessairement réalisés dans le même matériau. Par exemple, le contenant 1 et la boucle 17 peuvent être réalisés dans un matériau plastique rigide (identique ou pas) et le lien 18 dans un matériau plastique souple. D'autres combinaisons de matériaux sont envisageables.

Toujours dans un souci de simplifier la conception et de limiter les coûts, l'élément de fermeture 16 et le compartiment 8 sont réalisés dans un matériau plastique et forment une pièce monobloc. Cette matière plastique est préférentiellement une matière plastique rigide du type polypropylène, polycarbonate polychlorure de vinyle, etc. Ce peut être le même matériau que celui du contenant 1, du lien 18 et de la boucle 17 ou un matériau différent. Egalement, l'élément de fermeture 16 et le compartiment 8 ne sont pas nécessairement réalisés dans le même matériau. Par exemple, l'élément de fermeture 16 peut être réalisé dans un matériau plastique rigide et le compartiment 8 dans un matériau plastique souple. D'autres combinaisons de matériaux sont envisageables.

Pour simplifier encore davantage la conception et limiter les coûts, le contenant 1, le lien 18, la boucle 17, l'élément de fermeture 16, l'organe de liaison 19, l'élément de fermeture 16 et, le cas échéant le compartiment 8, sont réalisés dans un matériau plastique, préférentiellement à partir de la même matière plastique moulée, et forment, dans un état initial, une pièce monobloc.

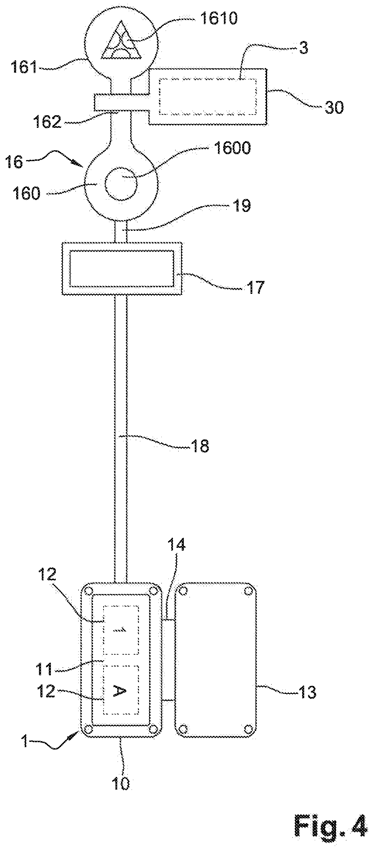

Dans la variante de réalisation illustrée sur la figure 4, le support intégrant l'identifiant de la soudure S et/ou intégrant l'identifiant alpha numérique se présente sous la forme d'une étiquette 30 fixée sur l'élément de fermeture 16. L'étiquette 30 est par exemple une étiquette souple autocollante qui est collée au niveau de la charnière 164. La puce RFID 3 est intégrée dans cette étiquette 30. La puce RFID 3 reste ainsi physiquement disjointe du contenant 1 et solidarisée à l'élément de fermeture 16. L'identifiant de la soudure S et/ou l'identifiant alpha numérique, peuvent également être intégrés de manière cachée ou cryptée dans un code-barres (ex : Q-R code) imprimé ou rapporté (par collage par exemple) sur l'étiquette 30 ou sur un autre type de support.

Quel que soit le mode de réalisation, le contenant 1 est fixé de manière détachable, à l'ensemble formé par le support 8, 30 et l'élément de fermeture 16.

L'élément de fermeture 16 est conçu pour fermer le collier 15. Ce dernier permet d'installer le contenant 1 sur l'objet sur lequel est réalisée la soudure S à contrôler, notamment sur un tuyau T.

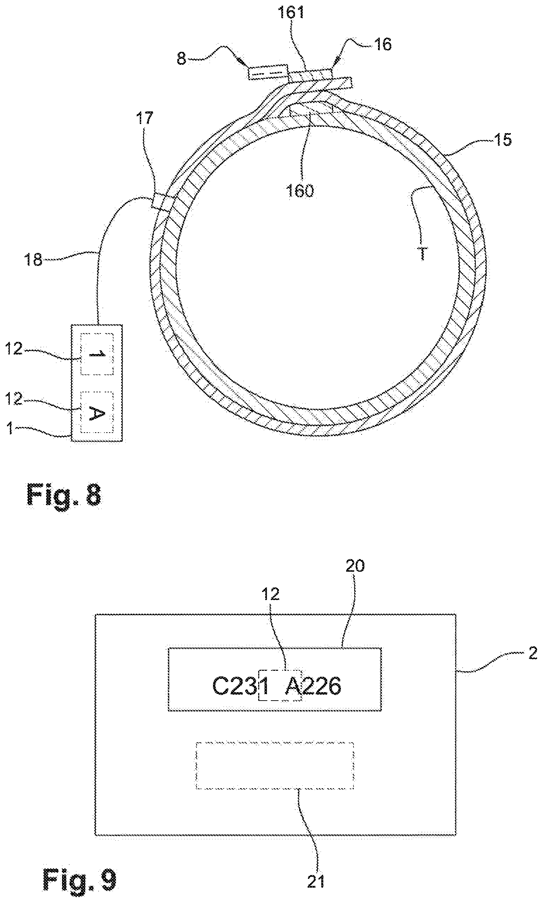

Sur la figure 8, le collier 15 est rebouclé sur lui-même sur sa longueur, autour d'un tuyau T. Les deux mâchoires 160 et 161 de l'élément de fermeture 16 bloquent le collier 15 en position.

Sur les figures 7a et 7b, le collier 15 se présente sous la forme d'une bande souple perforée dont la longueur dépend des dimensions de l'objet sur lequel elle est installée, et dans le cas d'une tuyauterie, du diamètre externe de cette dernière. A titre d'exemple, la largeur de la bande est comprise entre 5 mm et 15 mm et son épaisseur 'h' comprise entre 1 mm et 3 mm. Cette épaisseur 'h' est mesurée dans un état dit de repos où la bande n'est pas sollicitée. Les perforations 150 sont par exemple régulièrement espacées les unes des autres d'un intervalle de 10 mm et présentent un diamètre compris entre 1 mm et 3 mm.

Le collier 15 est avantageusement réalisé dans un matériau étirable dont les propriétés sont telles que l'épaisseur 'h' dudit collier diminue lorsqu'il est étiré. Sur la figure 7b, l'étirement du collier 15 est schématisé par les flèches ; l'épaisseur h' est inférieure à l'épaisseur h de la figure 7a. L'utilisation d'un collier 15 en caoutchouc synthétique ou naturel, ou en silicone permet d'obtenir ces propriétés spécifiques. Selon une caractéristique avantageuse de l'invention, les organes de verrouillage 1600 et 1610 sont configurés de sorte qu'ils ne puissent coopérer ensemble pour bloquer le collier 15 en position, que lorsque ledit collier est étiré et que l'épaisseur h' de ce dernier est diminuée

La figure 6 montre le collier 15 dans une configuration où il est rebouclé sur lui-même, les deux mâchoires 160 et 161 l'enserrant au niveau de ce rebouclage. L'ergot 1600 passe au travers de deux perforations 150 qui sont juxtaposées l'une au dessus de l'autre. Dans cette configuration, pour que l'ergot 1600 puisse pénétrer dans le logement 1610 et effacer les pattes d'accrochage 1611 pour se verrouiller, il est nécessaire d'étirer le collier 15 pour que son épaisseur diminue. Sans cet étirement, l'épaisseur h du collier est telle que l'ergot 1600 peut éventuellement pénétrer dans le logement 1610, mais sans possibilité d'atteindre les pattes d'accrochage 1611, rendant impossible un verrouillage de l'élément de fermeture 16.

L'installation d'un tel collier 15 sur le tuyau T peut être réalisée de la manière suivante : l'opérateur-installateur commence par insérer l'ergot 1600 dans une première perforation 150 et passe le collier dans la boucle 17 ; l'opérateur-installateur boucle ensuite le collier 15 sur lui-même autour du tuyau T, l'ergot 1600 faisant saillie vers lui ; l'opérateur-installateur étire manuellement le collier 15 pour insérer l'ergot 1600 dans une seconde perforation 150 ; si l'opérateur-installateur n'arrive pas à verrouiller les mâchoires 160 et 161, il étire davantage le collier 15 jusqu'à ce que son épaisseur soit suffisamment diminuée.

L'opérateur-installateur est donc contraint d'étirer le collier 15 pour correctement mettre en place l'élément de fermeture 16. Cet étirement conduit à un serrage du collier 15 autour du tuyau T de sorte que ledit collier ne peut plus être déplacé. De fait, un opérateur-radio mal intentionné ne peut pas déplacer le collier 15, et donc le contenant 1, vers une autre soudure.

Dans une variante de réalisation, le collier 15 est réalisé dans un matériau non étirable, par exemple en acier. Selon une autre variante de réalisation, le collier 15 se présente sous la forme d'un collier plastique de serrage communément dénommé "collier rilsan". Ce type de collier est constitué d'un ruban en matière plastique du type polyamide ou nylon. Le ruban est constitué sur l'un de ses côtés de dents régulières, en forme de dents de scie. L'une des extrémités du ruban est affinée pour faciliter son insertion alors que l'autre présente une cage à cliquet anti-retour pour accueillir son côté opposé. La cage impose au ruban un mouvement en sens unique vers l'avant : l'insertion est possible mais, une fois la première dent du ruban cliquetée dans le mécanisme, le retrait devient impossible à cause du cliquet anti-retour. Dans ce cas, le compartiment 8 peut être directement moulé sur la cage à cliquet anti-retour. La puce RFID 3 peut également être directement intégrée dans cette cage à cliquet anti-retour.

La puce RFID 3 se présente par exemple sous la forme d'un circuit électronique comprenant une mémoire et une antenne associée à une puce électronique lui permettant de recevoir et de répondre à des requêtes radio émises depuis un lecteur émetteur-récepteur.

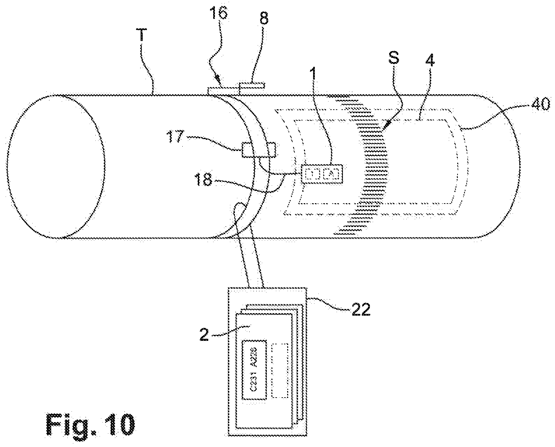

Sur les figures 8 et 10, le contenant 1 est attaché sur la tuyauterie T, au niveau de la soudure S à contrôler. Cette opération est réalisée par un opérateur-installateur autre que l'opérateur-radio. La boucle 17 passe autour du collier 15 de sorte que le contenant 1 peut librement tourner autour de la tuyauterie T. L'opérateur-radio a ainsi la possibilité de déplacer le contenant 1 pour le positionner à n'importe quel niveau de la soudure S, et plus particulièrement selon la position envisagée pour le tir radio.

En pratique, l'opérateur-radio positionne le contenant 1 juste à côté de la soudure S, préférentiellement de manière adjacente, pour que ledit contenant ne cache pas l'image qui sera prise de la soudure. Si plusieurs clichés de la soudure S doivent être pris selon différents angles, l'opérateur-radio peut aisément modifier la position du contenant 1 en conséquent. Chaque cliché radiographique est destiné à mettre en évidence la structure interne de la soudure S. Sur ce cliché, l'image de l'identifiant intégré dans le contenant 1 sera située à côté de l'image de la structure interne de la soudure S.

L'opérateur-installateur dispose de plusieurs dispositifs de repérage similaires à ceux illustrés sur les figures 1 et 4. Pour chacun de ces dispositifs de repérage, l'élément de fermeture 16 est initialement relié à l'ensemble contenant 1/lien 18/boucle 17, au moyen de l'organe de liaison 19. On a donc un état initial attaché où le contenant 1 est solidarisé à l'ensemble formé par le support 8, 30 et l'élément de fermeture 16. Le contenant 1, le support 8, 30 et l'élément de fermeture 16, forment alors une pièce unitaire. L'opérateur-installateur place l'identifiant alpha numérique « 1A » dans le logement 11 du contenant 1 puis verrouille le capot 13 sur la base 10. Il incrémente la mémoire de la puce RFID 3 avec l'identifiant unique « C231A226 » de la soudure S et/ou avec l'identifiant alpha numérique « 1A ». Il y a donc un appairage entre le contenant 1 et l'élément de fermeture 16 pourvue de la puce RFID 3.

L'identifiant unique de la soudure S et/ou l'identifiant alpha numérique sont préférentiellement cryptés dans la mémoire de la puce RFID 3 afin qu'une lecture directe de ladite puce ne puisse pas divulguer cet identifiant.

La mémoire de la puce RFID 3 peut être incrémentée avec d'autres informations, cryptées ou pas : nom de l'installation, nom du soudeur, localisation de la soudure, numéro de plan associé à la soudure, diamètre du tuyau T, épaisseur de la soudure, matériau de la soudure, nombre de clichés à prendre, etc. Jusqu'à l'installation finale, on est ainsi assuré que l'élément de fermeture 16 pourvue de la puce RFID 3 est associé au bon contenant 1. On écarte tout risque de mélanger un élément de fermeture 16 pourvue de la puce RFID 3 avec un autre contenant 1.

Cette incrémentation est réalisée automatiquement au moyen d'un lecteur émetteur-récepteur. Ce type d'appareil permet d'échanger des informations avec la puce RFID 3 et est du type connu de l'homme du métier. Ce lecteur est couplé à une unité de gestion, par exemple du type ordinateur, intégrant un processeur et une mémoire dans laquelle est enregistré un programme informatique dont les instructions, lorsqu'elles sont exécutées par ledit processeur, permettent de réaliser l'incrémentation de la mémoire de la puce RFID 3 ainsi que les différentes fonctionnalités décrites plus avant dans la description.

Après avoir incrémenté la mémoire de la puce RFID 3, l'opérateur-installateur édite, via l'unité de gestion, au moins une première étiquette 2 par l'intermédiaire d'une imprimante. La première étiquette 2, schématisée sur la figure 9, est par exemple une étiquette autocollante. Elle comprend entre autre l'inscription de l'identifiant unique 20 « C231A226 » de la soudure S. Cet identifiant unique 20 peut être visible à l'œil nu et/ou être invisible en étant inscrit de manière cryptée dans un code-barres (dont QR-Code) ou dans la mémoire d'une seconde puce RFID 21 dont est pourvue la première étiquette 2. L'identifiant 12 alpha numérique « 1A » peut également être inscrit de manière cryptée dans un code-barres ou dans la mémoire de la seconde puce RFID 21. Cette dernière peut en outre comprendre d'autres inscriptions telles que : nom de l'installation, nom du soudeur, localisation de la soudure, matériau de la soudure, etc.

Pour un contrôle optimal de la soudure S, il peut être nécessaire de prendre plusieurs clichés radiographiques sous plusieurs angles. En pratique, on prévoit d'imprimer plusieurs premières étiquettes 2 identiques de sorte que pour une soudure S, l'opérateur-radio puisse associer une de ces étiquettes à chaque cliché radiographique pris.

L'opérateur-installateur peut également éditer, via l'unité de gestion, une autre étiquette autocollante qui est directement collée sur le contenant 1. Cette autre étiquette comprend par exemple l'inscription, visible à l'œil nu, de l'identifiant 20 « C231A226 » de la soudure S ainsi que le numéro de plan associé à ladite soudure. Grâce à cette étiquette, l'opérateur-installateur peut aisément contrôler qu'il installe le contenant 1 au niveau de la bonne soudure S.

L'opérateur-installateur range dans un pochon : les premières étiquettes 2, le dispositif de repérage associé (contenant 1/lien 18/boucle 17/élément de fermeture 16/puce RFID 3), et un collier 15.

L'opérateur-installateur réitère ces étapes (mise en place de l'identifiant alpha numérique, incrémentation de la puce RFID, édition des étiquettes, rangement dans le pochon) pour chaque dispositif de repérage. Ces étapes sont réalisées dans un lieu (par exemple un bureau) qui est éloigné du lieu (par exemple une salle des machines ou un bâtiment réacteur d'une centrale nucléaire) où sont situés les objets sur lesquels sont réalisées les soudures à radiographier.

Muni de tous ces pochons, l'opérateur-installateur atteint le lieu où sont situés les objets sur lesquels sont réalisées les soudures à radiographier. L'élément de fermeture 16 est encore relié au contenant 1 (à la base 10, ou au lien 18 ou à la boucle 17) par l'organe de liaison 19. Jusqu'à l'installation finale, il est ainsi assuré que l'élément de fermeture 16 pourvu de la puce RFID 3 reste bien associé au contenant 1 auquel il est appairé. On écarte tout risque de mélanger un élément de fermeture 16 pourvu d'une puce RFID 3 avec un autre contenant 1.

En se rapportant à l'exemple de la figure 10, l'opérateur-installateur installe le contenant 1 sur un tuyau T où est réalisée une soudure S. Il désolidarise physiquement l'élément de fermeture 16 du contenant 1 (ou du lien 18 ou de la boucle 17) en détachant l'organe de liaison 19. Il passe ensuite le collier 15 dans la boucle 17 et installe ledit collier autour du tuyau T de la manière décrite précédemment. Il apparait avantageux de conserver les premières étiquettes 2 dans le pochon 22, et d'accrocher ce pochon sur le collier 15. Lorsque ce dernier est correctement fermé par l'élément de fermeture 16, l'opérateur-installateur installe les autres contenants au niveau des autres soudures de sorte que toutes les soudures à radiographier de l'installation soient repérées.

Lorsque tous les contenants 1 sont installés, l'opérateur-radio peut intervenir. Il installe le contenant 1 au niveau de la soudure S (selon l'angle choisi) et prend un cliché radiographique de l'ensemble soudure S/ contenant 1, au moyen d'un appareil radiographique classique.

Si la soudure S est difficile d'accès, un opérateur-radio mal intentionné pourrait envisager de déplacer le contenant 1 vers une autre soudure plus facile d'accès. Il lui sera alors nécessaire de briser l'élément de fermeture 16 pour détacher le contenant 1 du collier 1 et installer ledit contenant au niveau d'une autre soudure plus facile d'accès. Après avoir réalisé le(s) tir(s) radio de cette autre soudure avec le contenant 1, l'opérateur-radio ne pourra pas replacer ledit contenant 1 au niveau de la soudure S avec l'élément de fermeture 16. En effet, cet élément de fermeture 16 ne peut pas être remonté ou détruit ou, à minima, présente des marques visibles à l'œil nu. Et il ne pourra pas le remplacer par un autre élément de fermeture similaire puisque que l'élément de fermeture 16 qu'il a brisé est unique, intimement associé à l'identifiant unique de la soudure S. Le processus de contrôle implique généralement l'intervention d'un opérateur-contrôleur. Ce dernier vérifie ultérieurement, après la prise des clichés radiographiques, que tous les contenants sont bien installés au niveau des soudures correspondantes. Lors de son inspection, il pourra contrôler visuellement que les éléments de fermeture 16 sont intacts. Muni d'un lecteur, il pourra également lire ou scanner chaque puce RFID 3 pour vérifier que l'identifiant unique qu'elle contient correspond bien à la soudure en question, et pourra également vérifier que l'identifiant alpha numérique qu'elle contient correspond bien à l'identifiant alpha numérique inscrit sur l'étiquette collée sur le contenant 1.

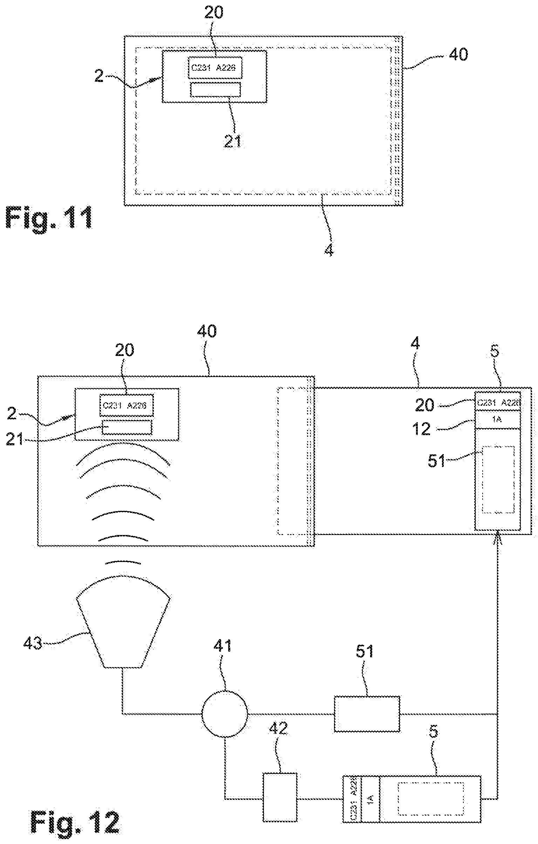

Comme illustré sur les figures 10 et 11, le cliché radiographique 4 est initialement inséré dans une enveloppe 40 permettant de le protéger de la lumière. Et la prise radio s'effectue en maintenant le cliché 4 inséré dans son enveloppe 40 de protection. Ce n'est qu'au moment de son développement que le cliché 4 sera sorti de l'enveloppe 40.

En se rapportant à la figure 11, dès que le cliché radiographique 4 est pris, et avant tout développement, l'opérateur-radio fixe une première étiquette 2 sur l'enveloppe 40 scellée, par exemple au moyen de colle préalablement disposée sur une face de ladite étiquette, ou par tout autre moyen de fixation similaire. L'opérateur-radio réitère cette opération pour chaque cliché pris de la soudure S, et pour chaque autre soudure de l'installation.

Selon l'exemple illustré par les figures annexées et plus particulièrement par la figure 12, à l'issue de son inspection, l'opérateur-radio dispose de plusieurs enveloppes 40 contenant chacune un cliché radiographique 4. L'opérateur-radio, ou un autre opérateur lit le code barre ou la seconde puce RFID 21 disposé sur la première étiquette 2. Cette lecture est réalisée au moyen d'un lecteur 43 adapté (type lecteur de code-barres, scanneur de puce RFID, ...) couplé à une unité de gestion électronique 41. Cette dernière se présente par exemple sous la forme d'un ordinateur, intégrant un processeur et une mémoire dans laquelle est enregistré un programme informatique dont les instructions, lorsqu'elles sont exécutées par ledit processeur, permettent :
- d'extraire tout ou partie des données contenues dans la mémoire de la seconde puce RFID 21, et notamment l'identifiant alpha numérique 12 et l'identifiant unique 20 de la soudure S,
- et d'incrémenter la mémoire d'une troisième puce RFID 51 avec ces identifiants 12 et 20.

L'unité de gestion électronique 41 peut également piloter une imprimante 42 pour éditer automatiquement une seconde étiquette 5 pouvant directement intégrer la troisième puce RFID 51. Cette dernière peut également être intégrée à l'étiquette 5 postérieurement à son édition, par exemple par collage. Au moins l'identifiant alpha numérique 12 est inscrit de manière visible à l'œil nu sur la seconde étiquette 5. L'identifiant unique 20 de la soudure S et/ou d'autres informations peuvent également être inscrits de manière visible sur l'étiquette 5 et/ou de manière invisible dans un code-barres ou dans la mémoire de la troisième puce RFID 51.

Après avoir sorti le cliché radiographique 4 de l'enveloppe 40, la seconde étiquette 5, dans laquelle est intégrée la troisième puce RFID 51, est fixée sur ledit cliché, par exemple au moyen de colle préalablement disposée sur une face de ladite étiquette, ou par tout autre moyen de fixation similaire.

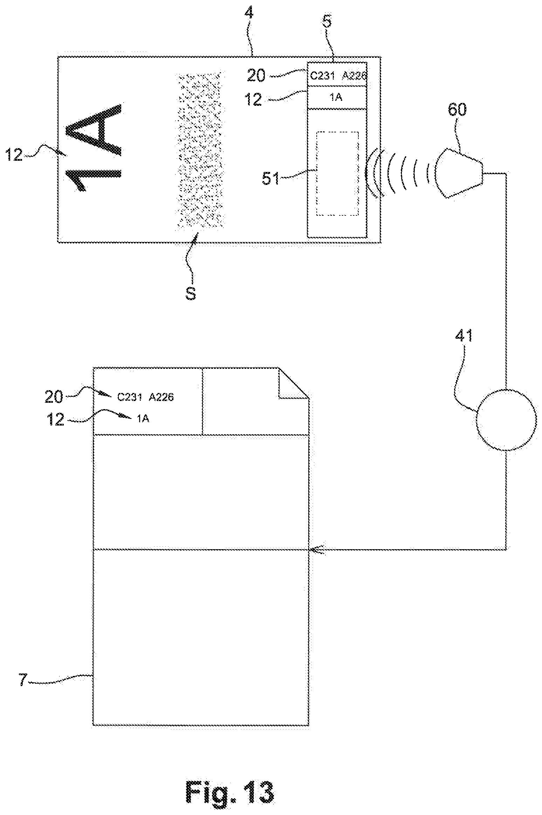

Comme illustré sur la figure 13, le cliché radiographique 4 est ensuite développé pour révéler l'image latente de la structure interne de la soudure S et l'image latente de l'identifiant alpha numérique 12 qui devient ainsi visible à l'œil nu. Ce développement est réalisé automatiquement ou manuellement au moyen d'une développeuse classique. On peut par exemple utiliser une développeuse commercialisée par la société 3M® sous la marque DryView®.

Un opérateur vérifie alors la correspondance entre l'identifiant alpha numérique 12 visible à l'œil nu sur le cliché radiographique 4 développé et l'identifiant alpha numérique 12 inscrit sur la seconde étiquette 5. Cette vérification est réalisée manuellement à l'œil nu, ou automatiquement au moyen d'un scanner. S'il n'y a pas de correspondance entre ces deux identifiants alphanumériques, une falsification doit être signalée par tout moyen approprié. En cas de correspondance, l'opérateur peut établir un rapport.

Plus particulièrement, en examinant le cliché, un opérateur qualifié interprète l'image de la structure interne de la soudure S en relevant les indications présentes et en les évaluant selon les normes en vigueur et/ou selon des spécifications particulières. L'opérateur averti pourra par exemple déceler la présence de défauts tels que des microfissures ou au contraire constater l'intégrité de la soudure S. Cette évaluation est ensuite retranscrite dans le rapport de l'opérateur.

Selon une caractéristique avantageuse de l'invention illustrée sur la figure 13, l'établissement de ce rapport est automatisé au moins en partie. En cas de correspondance entre l'identifiant alpha numérique 12 visible à l'œil nu sur le cliché 4 et l'identifiant alpha numérique 12 inscrit sur la seconde étiquette 5, on lit la troisième puce RFID 51, au moyen du lecteur 43 par exemple. L'unité de gestion électronique 41 permet de générer un rapport prérempli 7 dans lequel sont consignées les informations contenues dans la mémoire de la troisième puce RFID 51. Ce rapport 7 peut être généré sous forme papier au moyen d'une imprimante pilotée par l'unité 41, ou sous format électronique.

Sur ce rapport 7, peuvent être consignées automatiquement les informations contenues dans la mémoire de la troisième puce RFID 51 et notamment : l'identifiant 20 de la soudure S, l'identifiant alphanumérique 12, la date de prise du cliché radiographique, le nom de l'opérateur ayant interprété le cliché radiographique 3, le nom de l'installation, le nom du soudeur, le matériau de la soudure, etc. L'opérateur peut ensuite rentrer manuellement des observations concernant la structure interne de la soudure telles que : absence ou présence de défauts, localisation de ces défauts, mesures préconisées, etc.

L'agencement des différents éléments et/ou moyens et/ou étapes de l'invention, dans les modes de réalisation décrits ci-dessus, ne doit pas être compris comme exigeant un tel agencement dans toutes les implémentations. En tout état de cause, on comprendra que diverses modifications peuvent être apportées à ces éléments et/ou moyens et/ou étapes, sans s'écarter de l'esprit et de la portée de l'invention. En particulier :
- Le contenant 1 peut se présenter sous la forme d'une pochette souple opaque (type pochette IQI), soudée à chaud pour empêcher l'identifiant alpha numérique de s'échapper.
- En lieu et place du capot 13, on peut couler dans le logement 11 une résine opaque dans laquelle sont noyés les éléments 12 constitutifs de l'identifiant alphanumérique.
- Le lien 18 peut être de section ovale, carrée, rectangulaire, etc. Il peut se présenter sous la forme d'une languette ou d'un câble en acier, ou sous d'autres formes.
- L'élément de fermeture 16 peut être une pièce indépendante, initialement physiquement disjointe du contenant 1, du lien 18 et/ou de la boucle 17.
- L'extrémité 1601 de l'ergot 1600 peut avoir une forme de pointe, de tronc de cône ou toute autre forme convenant à l'homme du métier.
- En substitution de l'ergot 1600 et du logement 1610, l'homme du métier peut équiper les mâchoires 160 et 161 avec d'autres organes de verrouillage similaires, adaptés pour coopérer ensemble pour le blocage du collier 15.
- En lieu et place du capot 8, on peut couler dans le logement 81 une résine dans laquelle est noyée la puce RFID 3.
- Le contenant 1 et/ou le lien 18 et/ou la boucle 17 et/ou l'élément de fermeture 16 et/ou l'organe de liaison 19 et/ou l'élément de fermeture 16 et/ou le support 8 peuvent être réalisés dans un autre matériau que le plastique, par exemple dans un matériau composite ou en tissu.
- L'organe de liaison 19 peut se présenter sous la forme d'un anneau ou d'une chainette ouvrable (du type utilisé dans les porte-clés) qui relie, avec possibilité de rotation, le contenant 1 (plus particulièrement la base 10, la boucle 17, ou le lien 18), à l'élément de fermeture 16.

## Revendications

1. Système de repérage d'un objet (S) à radiographier, comprenant :
- un contenant (1) dans lequel est intégré, de manière invisible à l'œil nu, un identifiant alpha numérique opaque aux rayons X et gamma,
- un support (8, 30) intégrant de manière cachée ou cryptée un identifiant unique associé à l'objet (S) à radiographier et/ou l'identifiant alpha numérique,
- un collier (15) adapté pour installer le contenant (1) sur l'objet (S) à radiographier, lequel collier est pourvu d'un élément de fermeture (16) inviolable,
**caractérisé en ce que :**
- le support (8, 30) est physiquement disjoint du contenant (1) et solidarisé à l'élément de fermeture (16) du collier (15),
- l'ensemble formé par le support (8, 30) et l'élément de fermeture (16) est fixé de manière détachable au contenant (1), de sorte que :
∘ dans un état initial attaché, le contenant (1) est solidarisé à l'ensemble formé par le support (8, 30) et l'élément de fermeture (16), et
∘ dans un état détaché, le contenant (1) est physiquement désolidarisé de l'ensemble formé par le support (8, 30) et l'élément de fermeture (16).

2. Système selon la revendication 1, dans lequel le contenant (1) est pourvu d'un lien (18) à l'extrémité duquel est aménagée une boucle (17) adaptée pour recevoir le collier (15).

3. Système selon la revendication 2, dans lequel le contenant (1), le lien (18) et la boucle (17) forment une pièce monobloc.

4. Système selon l'une des revendications 2 ou 3, dans lequel l'élément de fermeture (16) est solidarisé au lien (18) ou à la boucle (17) par un organe de liaison (19), lequel organe de liaison est sécable ou adapté pour être découpé, de sorte que ledit élément de fermeture puisse être physiquement désolidarisé dudit lien ou de ladite boucle pour fermer le collier (15).

5. Système selon l'une des revendications 1 à 3, dans lequel le contenant (1) se présente sous la forme d'un compartiment présentant une base (10) pourvue d'un logement (11) dans lequel sont installés des éléments (12) constitutifs de l'identifiant alpha numérique, l'élément de fermeture (16) est solidarisé à ladite base (10) par un organe de liaison (19), lequel organe de liaison est sécable ou adapté pour être découpé, de sorte que ledit élément de fermeture puisse être ultérieurement physiquement désolidarisé dudit contenant pour fermer le collier (15).

6. Système selon l'une des revendications 4 ou 5, dans lequel le contenant (1), le lien (18), la boucle (17), l'élément de fermeture (16) et l'organe de liaison (19) forment, dans un état initial, une pièce monobloc.

7. Système selon l'une des revendications précédentes, dans lequel :
- le collier (15) est réalisé dans un matériau étirable,
- les propriétés du matériau du collier (15) sont telles que l'épaisseur (h) dudit collier diminue lorsqu'il est étiré,
- l'élément de fermeture (16) est formé par deux mâchoires (160, 161) adaptées pour bloquer le collier (15) en position lorsqu'il est rebouclé sur lui-même sur sa longueur, lesdites mâchoires étant pourvues d'organes de verrouillage (1600, 1610) coopérant ensemble pour le blocage dudit collier,
- les organes de verrouillage (1600, 1610) sont configurés de sorte qu'ils ne puissent coopérer ensemble pour bloquer le collier (15) en position, que lorsque ledit collier est étiré et que l'épaisseur (h') de ce dernier est diminuée.

8. Système selon l'une des revendications précédentes, dans lequel le contenant (1) se présente sous la forme d'un compartiment présentant :
- une base (10) pourvue d'un logement dans lequel est installé l'identifiant alpha numérique,
- un capot (13),
- des éléments (100, 130) de verrouillage du capot (13) sur la base (10).

9. Système selon l'une des revendications 1 à 8, dans lequel le support (8) comporte une puce RFID (3) dans la mémoire de laquelle est incrémenté l'identifiant unique associé à l'objet (S) à radiographier et/ou l'identifiant alpha numérique.

10. Système selon la revendication 9, dans lequel le support se présente sous la forme d'un compartiment (8) aménagé sur l'élément de fermeture (16), lequel compartiment est pourvu d'un logement (81) dans lequel est installé la puce RFID (3).

11. Système selon la revendication 9, dans lequel le support se présente sous la forme d'une étiquette (30) fixée sur l'élément de fermeture (16), la puce RFID (3) étant intégrée dans ladite étiquette.

12. Système selon l'une des revendications 1 à 8, dans lequel le support (8) comporte un code-barres dans lequel est intégré l'identifiant unique associé à l'objet (S) à radiographier et/ou l'identifiant alpha numérique.

13. Système selon la revendication 12, dans lequel le support se présente sous la forme d'une étiquette (30) fixée sur l'élément de fermeture (16), le code-barres étant imprimé ou rapporté sur ladite étiquette.

14. Procédé pour repérer un objet (S) à radiographier, comprenant les étapes suivantes :
- intégrer dans un contenant (1) un identifiant alpha numérique opaque aux rayons X et gamma, lequel identifiant est invisible à l'œil nu après son intégration dans ledit contenant,
- associer un identifiant unique à l'objet (S) à radiographier,
- intégrer de manière cachée ou cryptée, dans un support (8, 30), l'identifiant unique associé à l'objet (S) et/ou l'identifiant alpha numérique,
- installer le contenant (1) sur l'objet (S), au moyen d'un collier (15) pourvu d'un élément de fermeture (16),
**caractérisé en ce que** le procédé comprend en outre les étapes consistant à :
- disjoindre le support (8, 30) du contenant (1) pour solidariser ledit support à l'élément de fermeture (16) du collier (15).
- fixer au contenant (1), de manière détachable, l'ensemble formé par le support (8, 30) et l'élément de fermeture (16), de sorte que :
∘ dans un état initial attaché, le contenant (1) est solidarisé à l'ensemble formé par le support (8, 30) et l'élément de fermeture (16), et
∘ dans un état détaché, le contenant (1) est physiquement désolidarisé de l'ensemble formé par le support (8, 30) et l'élément de fermeture (16).

15. Procédé selon la revendication 14, comprenant une étape consistant à relier le contenant (1) à un lien (18) à l'extrémité duquel est aménagée une boucle (17) adaptée pour recevoir le collier (15), l'élément de fermeture (16) étant solidarisé au lien (18) ou à la boucle (17) par un organe de liaison (19), lequel organe de liaison est sécable ou adapté pour être découpé, de sorte que ledit élément de fermeture (16) puisse être physiquement désolidarisé dudit lien (18) ou de ladite boucle (17) pour fermer le collier (15), ledit procédé comprenant en outre les étapes consistant à :
- intégrer l'identifiant unique et/ou l'identifiant alpha numérique dans le support (8, 30) lorsque l'élément de fermeture (16) est initialement solidarisé au lien (18) ou à la boucle (17) par l'organe de liaison (19), laquelle intégration est réalisée dans un lieu qui est éloigné du lieu où est situé l'objet (S) à radiographier,
- atteindre le lieu où est situé l'objet (S) à radiographier en maintenant l'élément de fermeture (16) solidarisé au lien (18) ou à la boucle (17) par l'organe de liaison (19),
- installer le contenant (1) sur l'objet (S) à radiographier, laquelle installation est réalisée après avoir physiquement désolidarisé l'élément de fermeture (16) du lien (18) ou de la boucle (17).

16. Procédé selon la revendication 14, comprenant une étape consistant à solidariser l'élément de fermeture (16) au contenant (1) par un organe de liaison (19), lequel organe de liaison est sécable ou adapté pour être découpé, de sorte que ledit élément de fermeture (16) puisse être physiquement désolidarisé dudit contenant (1), ledit procédé comprenant en outre les étapes consistant à :
- intégrer l'identifiant unique et/ou l'identifiant alpha numérique dans le support (8, 30) lorsque l'élément de fermeture (16) est initialement solidarisé au contenant (1) par l'organe de liaison (19), laquelle intégration est réalisée dans un lieu qui est éloigné du lieu où est situé l'objet (S) à radiographier,
- atteindre le lieu où est situé l'objet (S) à radiographier en maintenant l'élément de fermeture (16) solidarisé au contenant (1) par l'organe de liaison (19),
- installer le contenant (1) sur l'objet (S) à radiographier, laquelle installation est réalisée après avoir physiquement désolidarisé l'élément de fermeture (16) du contenant (1).

## Patentansprüche

1. System zur Kennzeichnung eines zu röntgenden Objekts (S), umfassend:
- ein Aufnahmeelement (1), in welches auf eine für das bloße Auge unsichtbare Weise eine alphanumerische Kennung integriert ist, die für die Röntgen- und Gammastrahlen undurchlässig ist,
- einen Träger (8, 30), in den auf eine verdeckte oder verschlüsselte Weise eine eindeutige Kennung, die dem zu röntgenden Objekt (S) zugeordnet ist, und/oder die alphanumerische Kennung integriert sind,
- eine Schelle (15), die dazu eingerichtet ist, das Aufnahmeelement (1) auf dem zu röntgenden Objekt (S) anzubringen, wobei diese Schelle mit einem manipulationssicheren Verschlusselement (16) versehen ist,
**dadurch gekennzeichnet, dass**:
- der Träger (8, 30) von dem Aufnahmeelement (1) physisch getrennt ist und mit dem Verschlusselement (16) der Schelle (15) fest verbunden ist,
- die von dem Träger (8, 30) und dem Verschlusselement (16) gebildete Anordnung auf lösbare Weise an dem Aufnahmeelement (1) befestigt ist, derart, dass:
∘ in einem verbundenen Anfangszustand das Aufnahmeelement (1) mit der von dem Träger (8, 30) und dem Verschlusselement (16) gebildeten Anordnung fest verbunden ist, und
∘ in einem gelösten Zustand das Aufnahmeelement (1) von der von dem Träger (8, 30) und dem Verschlusselement (16) gebildeten Anordnung physisch getrennt ist.

2. System nach Anspruch 1, wobei das Aufnahmeelement (1) mit einem Verbindungsteil (18) versehen ist, an dessen Ende eine Öse (17) angeordnet ist, die dazu eingerichtet ist, die Schelle (15) aufzunehmen.

3. System nach Anspruch 2, wobei das Aufnahmeelement (1), das Verbindungsteil (18) und die Öse (17) ein einstückiges Teil bilden.

4. System nach einem der Ansprüche 2 oder 3, wobei das Verschlusselement (16) mit dem Verbindungsteil (18) oder mit der Öse (17) durch ein Verbindungsorgan (19) fest verbunden ist, wobei dieses Verbindungsorgan brechbar ist oder dazu eingerichtet ist, zerschnitten zu werden, so dass das Verschlusselement von dem Verbindungsteil oder von der Öse physisch getrennt werden kann, um die Schelle (15) zu schließen.

5. System nach einem der Ansprüche 1 bis 3, wobei das Aufnahmeelement (1) in der Form eines Faches vorliegt, das einen Unterteil (10) aufweist, der mit einem Aufnahmeraum (11) versehen ist, in welchem Elemente (12) angebracht sind, die Bestandteile der alphanumerischen Kennung sind, das Verschlusselement (16) mit dem Unterteil (10) durch ein Verbindungsorgan (19) fest verbunden ist, dieses Verbindungsorgan (19) brechbar ist oder dazu eingerichtet ist, zerschnitten zu werden, so dass das Verschlusselement später von dem Aufnahmeelement physisch getrennt werden kann, um die Schelle (15) zu schließen.

6. System nach einem der Ansprüche 4 oder 5, wobei das Aufnahmeelement (1), das Verbindungsteil (18), die Öse (17), das Verschlusselement (16) und das Verbindungsorgan (19) in einem Anfangszustand ein einstückiges Teil bilden.

7. System nach einem der vorhergehenden Ansprüche, wobei:
- die Schelle (15) aus einem dehnbaren Material hergestellt ist,
- die Eigenschaften des Materials der Schelle (15) so geartet sind, dass sich die Dicke (h) der Schelle verringert, wenn sie gedehnt wird,
- das Verschlusselement (16) von zwei Spannbacken (160, 161) gebildet wird, die dazu eingerichtet sind, die Schelle (15) in ihrer Position zu arretieren, wenn sie auf ihrer Länge in einer Schleife zu sich selbst zurückgeführt ist, wobei die Spannbacken mit Verriegelungsorganen (1600, 1610) versehen sind, die zur Arretierung der Schelle zusammenwirken,
- die Verriegelungsorgane (1600, 1610) derart gestaltet sind, dass sie nur dann zusammenwirken können, um die Schelle in ihrer Position zu arretieren, wenn die Schelle gedehnt ist und wenn die Dicke (h') dieser Letzteren verringert ist.

8. System nach einem der vorhergehenden Ansprüche, wobei das Aufnahmeelement (1) in der Form eines Faches vorliegt, welches aufweist:
- einen Unterteil (10), der mit einem Aufnahmeraum versehen ist, in welchem die alphanumerische Kennung angebracht ist,
- eine Haube (13),
- Elemente (100, 130) zur Verriegelung der Haube (13) auf dem Unterteil (10).

9. System nach einem der Ansprüche 1 bis 8, wobei der Träger (8) einen RFID-Chip (3) aufweist, in dessen Speicher die eindeutige Kennung, die dem zu röntgenden Objekt (S) zugeordnet ist, und/oder die alphanumerische Kennung inkrementiert wird.

10. System 10 nach Anspruch 9, wobei der Träger in der Form eines Faches (8) vorliegt, das auf dem Verschlusselement (16) angeordnet ist, wobei dieses Fach mit einem Aufnahmeraum (81) versehen ist, in welchem der RFID-Chip (3) angebracht ist.

11. System nach Anspruch 9, wobei der Träger in der Form eines Etiketts (30) vorliegt, das auf dem Verschlusselement (16) befestigt ist, wobei der RFID-Chip (3) in das Etikett integriert ist.

12. System nach einem der Ansprüche 1 bis 8, wobei der Träger (8) einen Barcode aufweist, in welchen die eindeutige Kennung, die dem zu röntgenden Objekt (S) zugeordnet ist, und/oder die alphanumerische Kennung integriert ist.

13. System nach Anspruch 12, wobei der Träger in der Form eines Etiketts (30) vorliegt, das auf dem Verschlusselement (16) befestigt ist, wobei der Barcode auf das Etikett gedruckt oder auf ihm angebracht ist.

14. Verfahren zum Kennzeichnen eines zu röntgenden Objekts (S), welches die folgenden Schritte umfasst:
- Integrieren einer alphanumerischen Kennung, die für die Röntgen- und Gammastrahlen undurchlässig ist, in ein Aufnahmeelement (1), wobei diese Kennung nach ihrer Integration in das Aufnahmeelement für das bloße Auge unsichtbar ist,
- Zuordnen einer eindeutigen Kennung zu dem zu röntgenden Objekt (S),
- Integrieren der eindeutigen Kennung, die dem zu röntgenden Objekt (S) zugeordnet ist, und/oder der alphanumerischen Kennung auf eine verdeckte oder verschlüsselte Weise in einen Träger (8, 30),
- Anbringen des Aufnahmeelements (1) mittels einer Schelle (15), die mit einem Verschlusselement (16) versehen ist, auf dem Objekt (S),
**dadurch gekennzeichnet, dass** das Verfahren außerdem die folgenden Schritte umfasst:
- Trennen des Trägers (8, 30) von dem Aufnahmeelement (1), um den Träger mit dem Verschlusselement (16) der Schelle (15) fest zu verbinden,
- Befestigen der von dem Träger (8, 30) und dem Verschlusselement (16) gebildeten Anordnung auf lösbare Weise an dem Aufnahmeelement (1), derart, dass:
∘ in einem verbundenen Anfangszustand das Aufnahmeelement (1) mit der von dem Träger (8, 30) und dem Verschlusselement (16) gebildeten Anordnung fest verbunden ist, und
∘ in einem gelösten Zustand das Aufnahmeelement (1) von der von dem Träger (8, 30) und dem Verschlusselement (16) gebildeten Anordnung physisch getrennt ist.

15. Verfahren nach Anspruch 14, welches einen Schritt umfasst, der darin besteht, das Aufnahmeelement (1) mit einem Verbindungsteil (18) zu verbinden, an dessen Ende eine Öse (17) angeordnet ist, die dazu eingerichtet ist, die Schelle (15) aufzunehmen, wobei das Verschlusselement (16) mit dem Verbindungsteil (18) oder mit der Öse (17) durch ein Verbindungsorgan (19) fest verbunden ist, wobei dieses Verbindungsorgan brechbar ist oder dazu eingerichtet ist, zerschnitten zu werden, so dass das Verschlusselement (16) von dem Verbindungsteil (18) oder von der Öse (17) physisch getrennt werden kann, um die Schelle (15) zu schließen, wobei das Verfahren außerdem die folgenden Schritte umfasst:
- Integrieren der eindeutigen Kennung und/oder der alphanumerischen Kennung in den Träger (8, 30), wenn das Verschlusselement (16) anfänglich mit dem Verbindungsteil (18) oder mit der Öse (17) durch das Verbindungsorgan (19) fest verbunden ist, wobei diese Integration an einem Ort durchgeführt wird, welcher von dem Ort entfernt ist, wo sich das zu röntgende Objekt (S) befindet,
- Erreichen des Ortes, wo sich das zu röntgende Objekt (S) befindet, wobei das Verschlusselement (16) mit dem Verbindungsteil (18) oder mit der Öse (17) durch das Verbindungsorgan (19) fest verbunden gehalten wird,
- Anbringen des Aufnahmeelements (1) an dem zu röntgenden Objekt (S), wobei diese Anbringung durchgeführt wird, nachdem das Verschlusselement (16) von dem Verbindungsteil (18) oder von der Öse (17) physisch getrennt worden ist.

16. Verfahren nach Anspruch 14, welches einen Schritt umfasst, der darin besteht, das Verschlusselement (16) mit dem Aufnahmeelement (1) durch ein Verbindungsorgan (19) fest zu verbinden, wobei dieses Verbindungsorgan brechbar ist oder dazu eingerichtet ist, zerschnitten zu werden, so dass das Verschlusselement (16) von dem Aufnahmeelement (1) physisch getrennt werden kann, wobei das Verfahren außerdem die folgenden Schritte umfasst:
- Integrieren der eindeutigen Kennung und/oder der alphanumerischen Kennung in den Träger (8, 30), wenn das Verschlusselement (16) anfänglich mit dem Aufnahmeelement (1) durch das Verbindungsorgan (19) fest verbunden ist, wobei diese Integration an einem Ort durchgeführt wird, welcher von dem Ort entfernt ist, wo sich das zu röntgende Objekt (S) befindet,
- Erreichen des Ortes, wo sich das zu röntgende Objekt (S) befindet, wobei das Verschlusselement (16) mit dem Aufnahmeelement (1) durch das Verbindungsorgan (19) fest verbunden gehalten wird,
- Anbringen des Aufnahmeelements (1) an dem zu röntgenden Objekt (S), wobei diese Anbringung durchgeführt wird, nachdem das Verschlusselement (16) von dem Aufnahmeelement (1) physisch getrennt worden ist.

## Claims

1. System for locating an object (S) to be x-rayed, comprising:
- a container (1) in which is incorporated, invisibly to the naked eye, an alphanumeric identifier that is opaque to x-rays and gamma rays,
- a support (8, 30) incorporating, concealed or encrypted, a unique identifier associated with the object (S) to be x-rayed and/or the alphanumeric identifier,
- a collar (15) suitable for installing the container (1) on the object (S) to be x-rayed, which collar is provided with a tamper-proof closure element (16),
**characterized in that:**
- the support (8, 30) is physically separate from the container (1) and secured to the closure element (16) of the collar (15),
- the assembly formed by the support (8, 30) and the closure element (16) is fixed detachably to the container (1), such that:
∘ in an initial attached state, the container (1) is secured to the assembly formed by the support (8, 30) and the closure element (16), and
∘ in a detached state, the container (1) is physical ly separated from the assembly formed by the support (8, 30) and the closure element (16).

2. System according to Claim 1, wherein the container (1) is provided with a link (18) at the end of which is formed a loop (17) suitable for receiving the collar (15).

3. System according to Claim 2, wherein the container (1), the link (18) and the loop (17) form a single-piece part.

4. System according to one of Claims 2 and 3, wherein the closure element (16) is secured to the link (18) or to the loop (17) by a link member (19), which link member is breakable or suitable for being cut, such that said closure element can be physically separated from said link or from said loop to close the collar (15).

5. System according to one of Claims 1 to 3, wherein the container (1) takes the form of a compartment having a base (10) provided with a housing (11) in which are installed constituent elements (12) of the alphanumeric identifier, the closure element (16) is secured to said base (10) by a link member (19), which link member is breakable or suitable for being cut, such that said closure element can subsequently be physically separated from said container to close the collar (15).

6. System according to one of Claims 4 and 5, wherein the container (1), the link (18), the loop (17), the closure element (16) and the link member (19) form, in an initial state, a single-piece part.

7. System according to one of the preceding claims, wherein:
- the collar (15) is produced in a stretchable material,
- the properties of the material of the collar (15) are such that the thickness (h) of said collar reduces when it is stretched,
- the closure element (16) is formed by two jaws (160, 161) suitable for locking the collar (15) in position when it is looped back on itself over its length, said jaws being provided with locking members (1600, 1610) cooperating together for the locking of collar,
- the locking members (1600, 1610) are configured in such a way that they can cooperate together to lock the collar (15) in position only when said collar is stretched and the thickness (h') thereof is reduced.

8. System according to one of the preceding claims, wherein the container (1) takes the form of a compartment having:
- a base (10) provided with a housing in which the alphanumeric identifier is installed,
- a cover (13),
- elements (100, 130) for locking the cover (13) on the base (10).

9. System according to one of Claims 1 to 8, wherein the support (8) comprises an RFID chip (3) in the memory of which the unique identifier associated with the object (S) to be x-rayed and/or the alphanumeric identifier is or are incremented.

10. System according to Claim 9, wherein the support takes the form of a compartment (8) formed on the closure element (16), which compartment is provided with a housing (81) in which the RFID chip (3) is installed.

11. System according to Claim 9, wherein the support takes the form of a tag (30) fixed onto the closure element (16), the RFID chip (3) being incorporated in said tag.

12. System according to one of Claims 1 to 8, wherein the support (8) comprises a barcode in which the unique identifier associated with the object (S) to be x-rayed and/or the alphanumeric identifier is or are incorporated.

13. System according to Claim 12, wherein the support takes the form of a tag (30) fixed onto the closure element (16), the barcode being printed on or attached to said tag.

14. Method for locating an object (S) to be x-rayed, comprising the following steps:
- incorporating in a container (1) an alphanumeric identifier that is opaque to x-rays and gamma rays, which identifier is invisible to the naked eye after its incorporation in said container,
- associating a unique identifier with the object (S) to be x-rayed,
- incorporating, concealed or encrypted, in a support (8, 30), the unique identifier associated with the object (S) and/or the alphanumeric identifier,
- installing the container (1) on the object (S), by means of a collar (15) provided with a closure element (16) ,
**characterized in that** the method further comprises the steps of:
- separating the support (8, 30) from the container (1) to secure said support to the closure element (16) of the collar (15),
- detachably fixing to the container (1) the assembly formed by the support (8, 30) and the closure element (16), such that:
∘ in an initial attached state, the container (1) is secured to the assembly formed by the support (8, 30) and the closure element (16), and
∘ in a detached state, the container (1) is physically separated from the assembly formed by the support (8, 30) and the closure element (16).

15. Method according to Claim 14, comprising a step consisting in linking the container (1) to a link (18) at the end of which is formed a loop (17) suitable for receiving the collar (15), the closure element (16) being secured to the link (18) or to the loop (17) by a link member (19), which link member is breakable or suitable for being cut, such that said closure element (16) can be physically separated from said link (18) or from said loop (17) to close the collar (15), said method further comprising the steps of:
- incorporating the unique identifier and/or the alphanumeric identifier in the support (8, 30) when the closure element (16) is initially secured to the link (18) or to the loop (17) by the link member (19), which incorporation is performed in a place which is away from the place where the object (S) to be x-rayed is situated,
- reaching the place where the object (S) to be x-rayed is situated while keeping the closure element (16) secured to the link (18) or to the loop (17) by the link member (19),
- installing the container (1) on the object (S) to be x-rayed, which installation is performed after having physically separated the closure element (16) from the link (18) or from the loop (17).

16. Method according to Claim 14, comprising a step of securing the closure element (16) to the container (1) by a link member (19), which link member is breakable or suitable for being cut, such that said closure element (16) can be physically separated from said container (1), said method further comprising the steps of:
- incorporating the unique identifier and/or the alphanumeric identifier in the support (8, 30) when the closure element (16) is initially secured to the container (1) by the link member (19), which incorporation is performed in a place which is away from the place where the object (S) to be x-rayed is situated,
- reaching the place where the object (S) to be x-rayed is situated while keeping the closure element (16) secured to the container (1) by the link member (19),
- installing the container (1) on the object (S) to be x-rayed, which installation is performed after having physically separated the closure element (16) from the container.
